# EUROPÄISCHE PATENTSCHRIFT

(11) **EP 0 957 137 B1**
(45) Veröffentlichungstag und Bekanntmachung des Hinweises auf die Patenterteilung: **07.08.2002**
(21) Anmeldenummer: 99109071.3
(22) Anmeldetag: 07.05.1999
(51) Int. Cl.: C09B 67/22, C09B 62/44, D06P 1/38

(54) **Farbstoffmischung von wasserlöslichen faserreaktiven Azofarbstoffen, Verfahren zu ihrer Herstellung und ihre Verwendung**
Mixture of water soluble reactive azo dyes, process to manufacture it and its use
Mélange de colorants azoiques réactifs aquasolubles, son procédé de fabrication et son utilisation

(30) Priorität: 14.05.1998 DE 19821573
(43) Veröffentlichungstag der Anmeldung: 17.11.1999
(73) Patentinhaber: DyStar Textilfarben GmbH & Co. Deutschland KG, 60318 Frankfurt am Main (DE)
(72) Erfinder: Steckelberg, Joachim Dr., 65719 Hofheim (DE); Pedemonte, Ronald P. Dr., 65817 Eppstein-Vockenhausen (DE)

(56) Entgegenhaltungen:
- EP-A- 0 681 007
- EP-A- 0 719 841
- EP-A- 0 826 743
- DE-A- 4 414 320

## Beschreibung

Die Erfindung liegt auf dem technischen Gebiet der faserreaktiven Azofarbstoffe.

Aus der U.S.-Patentschrift Nr. 4 485 041, der europäischen Patentanmeldungs-Veröffentlichung Nr. O 094 055 und der deutschen Offenlegungsschrift Nr. 44 17 719 sind Farbstoffe bekannt, die den später angegebenen und definierten allgemeinen Formeln (1) und (2) entsprechen. Sie besitzen gewisse anwendungstechnische Mängel, wie beispielsweise unzureichende Waschechtheiten, eine zu große Abhängigkeit der Farbausbeute von wechselnden Färbeparametern im Färbeprozeß, eine unzureichende Löslichkeit im wäßrigen Färbebad in höheren Farbstoffkonzenrationen in Gegenwart von Elektrolytsalzen oder einen ungenügenden Farbaufbau auf Baumwolle und insbesondere Viskose (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern). Folge dieser Mängel können schlechte Reproduzierbarkeiten der erhältlichen Färbungen sein. Es ist jedoch insbesondere wichtig, Färbungen mit guter Farbausbeute zu erhalten, d.h. Färbungen, deren Farbtiefe im Verhältnis zur eingesetzten Farbstoffmenge, beispielsweise im Vergleich zu anderen Farbstoffen, aufgrund der Farbeigenschaft des Farbstoffes selbst (hoher Extinktionswert) und aufgrund des färberischen Verhaltens dieses Farbstoffes, wie gutes Ausziehvermögen und hoher Fixierwert, möglichst hoch ist. Setzt man Mischungen von Farbstoffen bestimmter Farbausbeute ein, so ist es die Regel, daß sich die Farbausbeute dieser Mischung von Farbstoffen aus der Summe der Farbausbeuten der Einzelfarbstoffe ergibt, weswegen die Farbausbeute einer Mischung von beispielsweise zwei Farbstoffen geringer sein wird als die Farbausbeute, die der Farbstoff mit der größeren Farbausbeute-Eigenschaft als Einzelfarbstoff bei gleicher Menge der Mischung der beiden Einzelfarbstoffe liefert.

Mit der vorliegenden Erfindung wurden nunmehr Farbstoffmischungen gefunden, die eine oder mehrere, wie zwei oder drei, Azofarbstoffe entsprechend der allgemeinen Formel (1) und einen oder mehrere, wie zwei oder drei, Azofarbstoffe entsprechend der allgemeinen Formel (2) enthalten, deren Farbstärke überraschenderweise höher liegen als die Summe der Farbstärken, die die Einzelfarbstoffe der Farbstoffmischung liefern. Dieser synergistische Effekt zeigt sich zudem in einem verbesserten Aufbauverhalten und besseren Waschechtheiten der erfindungsgemäßen Mischung gegenüber einzelnen Farbstoffen, die in der Mischung enthalten sind.

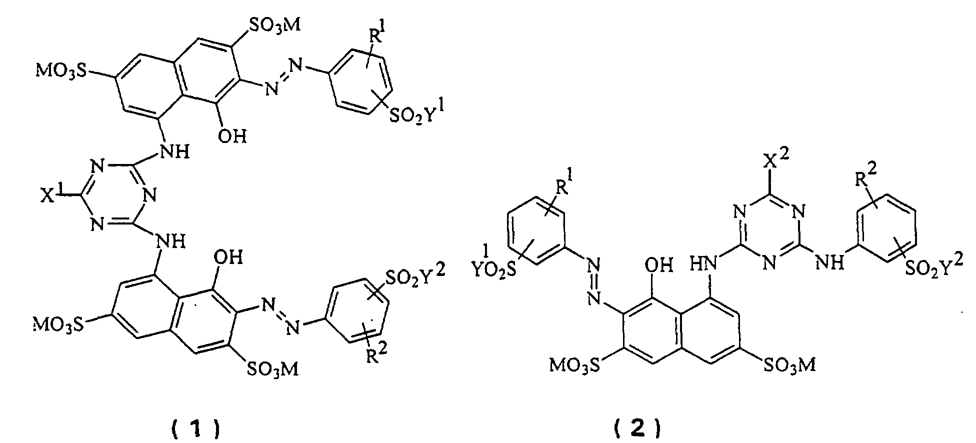

In diesen Formeln bedeuten:
- M: ist Wasserstoff, Ammonium, ein Alkalimetall oder das Äquivalent eines Erdalkalimetalls;
- R¹: ist Wasserstoff oder Sulfo;
- R²: hat eine der Bedeutungen von R¹;
- X¹: ist Fluor oder Chlor oder eine Gruppe der allgemeinen Formel -NR³R⁴ oder -OR³, worin R³ für H oder (C₁-C₄)-Alkyl oder Aryl, wie Phenyl, steht, das ggf. substituiert ist, und R⁴ eine Bedeutung von R³ hat oder eine die Gruppe -SO₂-Y¹ oder -SO₂-Y² tragende Arylgruppe, wie Phenylgruppe, oder (C₁-C₄)-Alkyl-Gruppe ist oder -NR³R⁴ gegebenenfalls substituiertes Morpholino oder Pyrimidino oder -NHCN ist;
- X²: hat eine der Bedeutungen von X¹;
- Y¹: ist Vinyl oder steht für eine Gruppierung der allgemeinen Formel -CH₂-CH₂-Z, worin
z ein Substituent ist, der durch Einwirkung von Alkali eliminiert werden kann, insbesondere Sulfato, Thiosulfato oder Acetyloxy ist;
- Y²: hat eine der Bedeutungen von Y¹;
die Gruppen -SO₂-Y¹ und -SO₂-Y² stehen meta oder para zur Azo- bzw. Aminogruppe.

Im allgemeinen sind der Azofarbstoff der allgemeinen Formel (1) und der Azofarbstoff der allgemeinen Formel (2) in der Mischung in einem Mischungsverhältnis von 90:10 Gew.-% bis 10:90 Gew.-%, bevorzugt im Verhältnis von 70:30 Gew.-% bis 30:70 Gew.-%, enthalten. Insbesondere bevorzugt sind sie in der Mischung in einem Verhältnis von 55:45 bis 45:55 Gew.-% enthalten.

Bevorzugt ist in den allgemeinen Formeln (1) und (2) der Rest R¹ = R² = Wasserstoff, M = H, Li oder Na und bevorzugt sind X¹ = X² Chlor oder Fluor. Bevorzugt sind weiterhin Y¹ und Y² gleich -CH₂-CH₂-Z mit Z = Sulfato.

Sowohl in den oben angegebenen allgemeinen Formeln als auch in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Thiosulfato", "Phosphato" und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung besitzt.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffmischungen als Farbstoffpulver mit einem Gehalt von 10 bis 80 Gew.-%, bezogen auf das Farbstoffpulver bzw. die Präparation, an einem Elektrolytsalz, das auch als Stellmittel bezeichnet wird, vor. Diese Farbstoffpulver können zudem die erwähnten Puffersubstanzen in einer Gesamtmenge von bis zu 5 Gew.-%, bezogen auf das Farbstoffpulver enthalten. Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 10 Gew.-%, bevorzugt bis zu 2 Gew.-%, enthalten.

Die erfindungsgemäßen Farbstoffmischungen können in üblicher Weise hergestellt werden, so durch mechanisches Mischen der einzelnen, aus den obengenannten Veröffentlichungen bekannten, in fester oder in flüssiger Form vorliegenden Farbstoffe in den erforderlichen Anteilen oder durch Synthese mittels der üblichen Diazotierungs- und Kupplungsreaktionen und Umsetzungsreaktionen mit den Halogentriazinkomponenten unter Verwendung von entsprechenden Mischungen solcher Komponenten in einer dem Fachmann geläufigen Weise und mit den hierzu erforderlichen Mengenanteilen. So kann man beispielsweise in der Weise vorgehen, daß man, bevorzugt in einer Eintopfreaktion, ein 2,4,6-Trihalogen-s-triazin, insbesondere 2,4,6-Trichlor- oder 2,4,6-Trifluor-s-triazin, zunächst in an und für sich bekannter Verfahrensweise mit 1-Amino-8-naphthol-3,6-disulfonsäure, wie bspw. bei einer Temperatur von o bis 40°C, bevorzugt von 0 bis 10°C, und einem pH-Wert von 0 bis 5, bevorzugt von 1 bis 2, und anschließend mit einer oder mehreren Aminoverbindungen der allgemeinen Formel (3A) oder (3B) 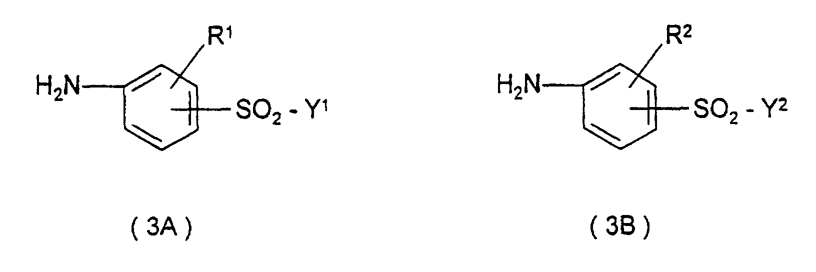 mit R¹, R². Y¹ und Y² der obengenannten Bedeutung oder einer Mischung einer oder mehrerer Aminoverbindungen der allgemeinen Formeln (3A) und (3B) in an und für sich bekannter Verfahrensweise, wie beispielsweise bei einer Temperatur zwischen 0 und 60°C, bevorzugt zwischen 20 und 40°C, und einem pH-Wert zwischen 2 und 8, bevorzugt zwischen 3 und 5, umsetzt. Die so erhaltenen Diamino-halogentriazin-Verbindungen können dann mit einem Diazoniumsalz, das aus einem gleichen oder anderen Amin der allgemeinen Formel (3A) oder (3B) oder zweier solcher Amine in wohlbekannter Weise hergestellt wurde, zu der Mischung der Farbstoffe (1) und (2) in an und für sich bekannter Verfahrensweise, beispielsweise bei einer Temperatur zwischen 10 und 50°C, bevorzugt zwischen 20 und 40°C, und bei einem pH-Wert zwischen 3 und 7, bevorzugt zwischen 4 und 5, gekuppelt werden. Farbstoffe der allgemeinen Formel (1) und (2), in denen X¹ und X² nicht Halogen sind, werden durch Umsetzung der Mischung mit den Verbindungen HOR³ oder HNR³R⁴ in an und für sich bekannter Weise, beispielsweise bei einer Temperatur zwischen 10 und 100°C, bevorzugt zwischen 40 und 80°C, und bei einem pH-Wert zwischen 3 und 7, bevorzugt zwischen 4 und 5, hergestellt.

Ausgangsverbindungen der allgemeinen Formel (3B) sind beispielsweise 4-(β-Sulfatoethylsulfonyl)-anilin, 3-(β-Sulfatoethylsulfonyl)-anilin, 2-Sulfo-4-(β-sulfatoethylsulfonyl)-anilin, 2-Sulfo-5-(β-sulfatoethylsulfonyl)-anilin, hiervon insbesondere 4-(β-Sulfatoethylsulfonyl)-anilin, sowie Derivate dieser Verbindungen, in welchen die β-Sulfatoethylsulfonyl-Gruppe durch die Vinylsulfonyl- oder β-Thiosulfato-ethylsulfonyl- oder β-Chlorethylsulfonyl-Gruppe ausgetauscht ist.

Die Abscheidung der auf chemischem Wege hergestellten erfindungsgemäßen Farbstoffmischungen aus deren Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen oder Sprühtrocknung der Reaktionslösung, wobei dieser Reaktionslösung eine Puffersubstanz zugefügt werden kann.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Azoverbindungen anfallenden Lösungen der erfindungsgemäßen Farbstoffmischungen, gegebenenfalls nach Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.
Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbstoffen verbesserten Farbausbeuten. Man färbt bevorzugt in wäßrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die erfindungsgemäßen Farbstoffmischungen zeichnen sich auf den Cellulosefasermaterialien bei Anwendung in den Färbe- und Druckverfahren durch eine höhe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colourists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch. Die erfindungsgemäßen Farbstoffmischungen liefern auf den genannten Materialien, bevorzugt Fasermaterialien, klare, gelbstichig bis blaustichig rote Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

### Beispiel 1

a) In eine Suspension aus 319,2 Teilen 1-Amino-8-naphthol-3,6-disulfonsäure in 1000 Teilen Wasser und 300 Teilen Eis werden unter gutem Rühren 190,1 Teile Cyanurchlorid eingetragen; der Reaktionsansatz wird noch vier Stunden zwischen 0 und 15°C und mittels Natriumbicarbonat bei einem pH-Wert zwischen 1,7 und 2,2 weitergerührt.
b) Die Lösung der Dichlortriazinverbindung von a) wird mit einer Lösung mit einem pH-Wert von 5,5 bis 6,0 von 133,0 Teilen 4-(β-Sulfatoethylsulfonyl)-anilin und 156 Teilen 1-Amino-8-naphthol-3,6-disulfonsäure in 640 Teilen Wasser vereinigt. Der pH-Wert wird auf etwa 5 gehalten und das Reaktionsgemisch im Verlaufe von ein bis zwei Stunden auf eine Temperatur von 30 bis 45°C erwärmt.
c) Getrennt hiervon wird das Diazoniumsalz der Diazokomponente hergestellt: Eine Lösung mit einem pH-Wert von 6,7 bis 6,8 von 410,4 Teilen 4-{β-Sulfatoethylsulfonyl)-anilin in 500 Teilen Wasser werden mit 192 Teilen einer 40 %igen wäßrigen Natriumnitritlösung versetzt. Dieses Gemisch wird unter gutem Rühren in eine Mischung aus 800 Teilen zerkleinertem Eis und 160 Teilen einer 31 %igen wäßrigen Satzsäure einfließen lassen. Man rührt noch eine Stunde bei einer Temperatur zwischen 0°C und 5°C nach und zersetzt sodann, wie üblich, überschüssige salpetrige Säure mit wenig Amidosulfonsäure.
c) Das unter b) hergestellte sekundäre Kondensationsprodukt wird mit der unter c) beschriebenen Diazoniumsalzlösung vereinigt. Zur Durchführung der Kupplungsreaktion wird das stark saure Reaktionsgemisch bei einer Temperatur von etwa 15°C mittels Natriumcarbonat auf einen pH-Wert von 4,5 bis 5,0 eingestellt und die Temperatur auf 20 bis 25°C erhöht. Es wird noch einige Stunden bei diesem pH-Wert und dieser Temperatur weitergerührt, bis die Kupplung beendet ist.
d) Sodann wird mittels Natriumcarbonat ein pH-Wert zwischen 6,0 und 6,5 eingestellt, der Ansatz klärfiltriert und das Filtrat sprühgetrocknet.

Es werden etwa 1650 Teile eines elektrolytsalz-, vorwiegend natriumchlorid- und natriumsulfathaltigen, Pulvers erhalten, das zu etwa 42 % das Natriumsalz der Verbindung der Formel (A) 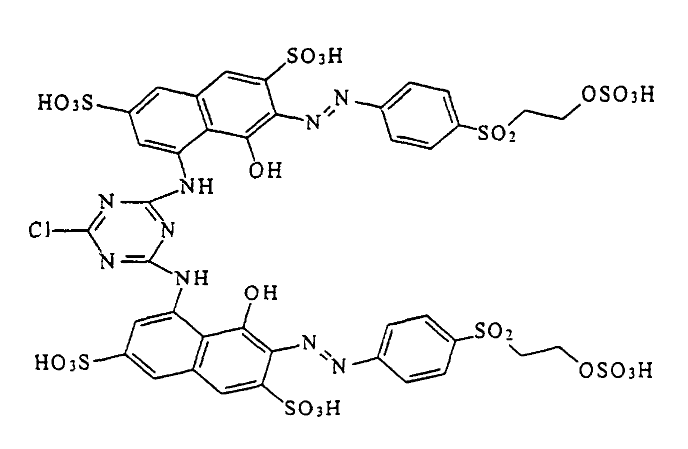 und zu etwa 28 % das Natriumsalz der Verbindung der Formel (B) 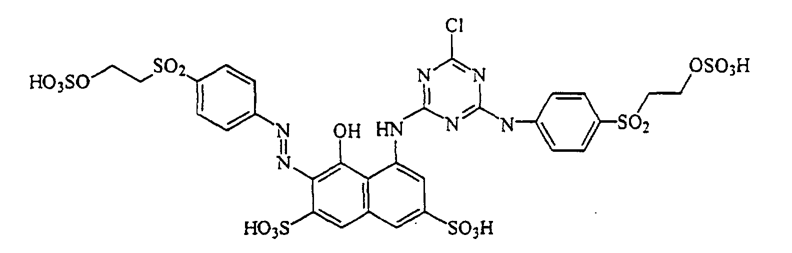 enthält. Diese Mischung zeigt sehr gute Farbstoffeigenschaften und liefert nach den in der Technik üblichen Anwendungs- und Fixiermethoden für faserreaktive Farbstoffe auf den in der Beschreibung genannten Materialien, wie Cellulosefasermaterialien, insbesondere Baumwolle und Viskose, farbstarke rote Färbungen und Drucke mit sehr guten Echtheitseigenschaften, von denen vor allem die sehr guten Wasch-, Licht-, Alkali-, Säure-, Wasser-, Meerwasser-, Schweiß- und Reibechtheiten hervorgehoben werden können. Die Färbungen zeichnen sich weiterhin durch ihren hohen Fixiergrad und guten Aufbau auf den Cellulosematerialien aus.

### Beispiel 2

Man trägt unter gutem Rühren 47.5 Teile Cyanurchlorid und 79,8 Teile 1-Amino-8-naphthol-3,6-disulfonsäure schnell in eine Mischung aus 330 Teilen Wasser und 140 Teilen Eis ein, rührt den Ansatz noch etwa 3,5 Stunden bei einem pH-Wert zwischen 1,5 und 2,0 und einer Temperatur zwischen 10 und 15°C weiter und klärt die Lösung dieses primären Kondensationsproduktes mittels Kieselgur und Filtration.
Sodann stellt man den pH-Wert mittels Calciumcarbonat auf 5 und gibt 33,2 Teile 3-(β-sulfatoethylsulfonyl)-anilin und 39.1 Teilen 1-Amino-8-naphthol-3,6-disulfonsäure hinzu, rührt den Ansatz zwei bis drei Stunden bei einer Temperatur von 18 bis 22°C, erwärmt ihn dann auf 50 bis 55°C und hält ihn unter Konstanthaltung des pH-Wertes von 4,0 bis 4,5 mittels Calciumcarbonat während 30 Minuten bei dieser Temperatur. Man rührt noch einige Stunden bei 18 bis 20°C
Man vereinigt die Lösung mit einer auf üblichem Wege durch Diazotierung mittels Natriumnitrit und Schwefelsäure in wäßrigem Medium hergestellten Suspension des Diazoniumsalzes aus 102,1 Teilen 3-(β-Sulfatoethylsulfonyl)-anilin, stellt das stark saure Kupplungsgemisch sodann bei einer Temperatur von etwa 10°C auf einen pH-Wert von 4,0 bis 4,5 mittels Calciumcarbonat und rührt noch einige Stunden bei 10 bis 14°C und innerhalb dieses pH-Bereiches weiter.
nach, saugt das Calciumsulfat ab, wäscht es mit Wasser nach und fällt in diesem vereinigten Filtrat und Waschwasser die Calciumionen mittels Natriumoxalat bei einem pH-Wert von 4,5 bis 5,0 und einer Temperatur von 30°C. Nach einstündigem Rühren filtriert man ab und isoliert die erfindungsgemäße Farbstoffmischung aus dem Filtrat durch Sprühtrocknung.

Man erhält etwa 390 Teile eines dunkelroten Pulvers, das neben Elektrolytsalzen etwa 44 %ig an dem Natriumsalz der Verbindung der Formel (C) 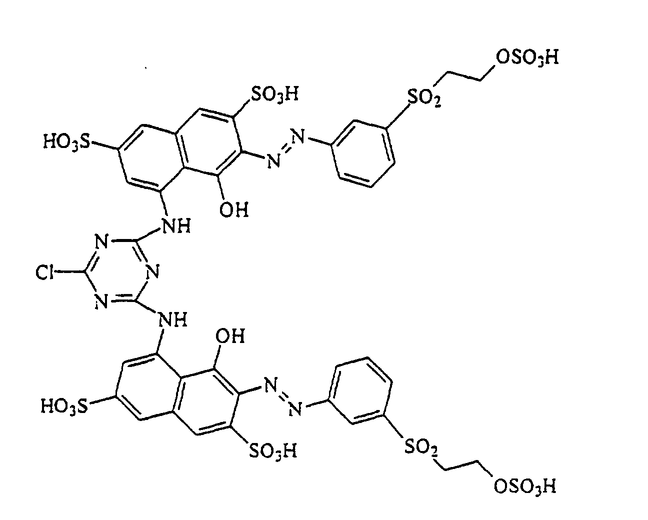 und etwa 28 %ig an dem Natriumsalz der Verbindung der Formel (D) 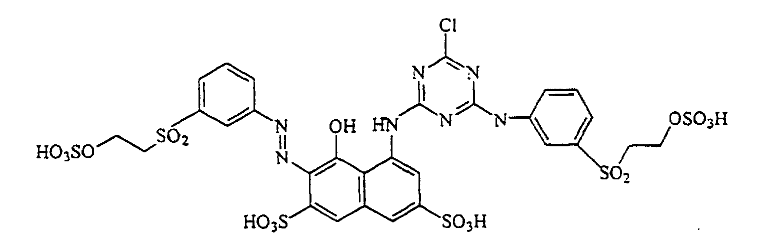 ist. Diese erfindungsgemäße Farbstoffmischung besitzt sehr gute anwendungstechnische Eigenschaften und liefert nach den in der Technik üblichen Druck- und Färbeweisen für faserreaktive Farbstoffe beispielsweise auf Cellulosefasermaterialien farbstarke rote Färbungen und Drucke von sehr guten Fabrikations- und Gebrauchsechtheiten, unter denen die Lichtechtheit, die Wasch-, Schweiß-, Wasser- und Meerwasserechtheiten sowie die Beständigkeit gegen gechlortes Trinkwasser (Chlorbadewasser) besonders erwähnt werden können. Die Fixierquote dieser erfindungsgemäßen Farbstoffmischung auf Cellulosefasermaterialien ist sehr hoch.

### Beispiele 3 bis 77

In den nachfolgenden Tabellenbeispielen sind weitere erfindungsgemäße Farbstoffmischungen aus Monoazoverbindungen der allgemeinen Formel (1) und (2) mit Hilfe ihrer Komponenten beschrieben. Sie lassen sich in erfindungsgemäßer Weise entweder durch mechanische Mischung der Einzelfarbstoffe oder aber auf chemischem Wege, beispielsweise analog einem der obigen Ausführungsbeispiele, mit Hilfe ihrer Ausgangskomponenten (Cyanurchlorid, Cyanurbromid oder Cyanurfluorid, der 1-Amino-8-naphthol-3,6-disulfonsäure und einer Aminoverbindung (3A) und/oder (3B) als zweite Kondensationskomponenten und einer weiteren Aminoverbindung (3A) und/oder (3B) als Diazokomponente und gegebenenfalls mit einem weiteren Amin der allgemeinen Formel HNR³R⁴ oder einer Verbindung der allgemeinen Formel HOR³ herstellen.
Die erfindungsgemäßen Farbstoffmischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheitseigenschaften und einem guten Farbaufbau in dem in dem jeweiligen Tabellenbeispiel angegebenen Farbton.
Die in der Rubrik MV angegebenen Zahlenverhältnisse geben das Gewichtsverhältnis in Prozent des bzw. der Farbstoffe der Formel (1) zu dem bzw. den Farbstoffen der Formel (2) an, in welchem die Farbstoffe in der jeweiligen Farbstoffmischung vorliegen.

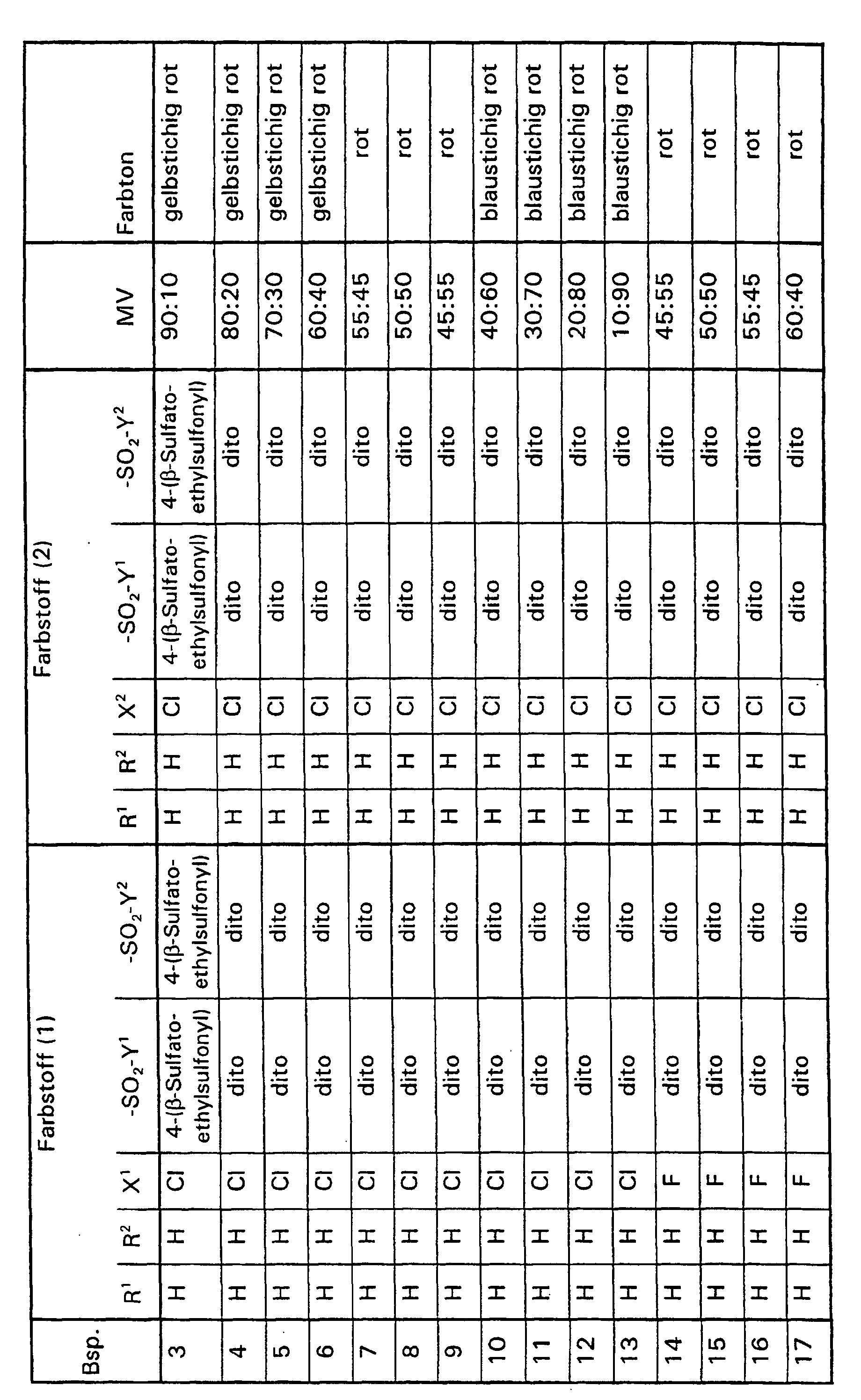

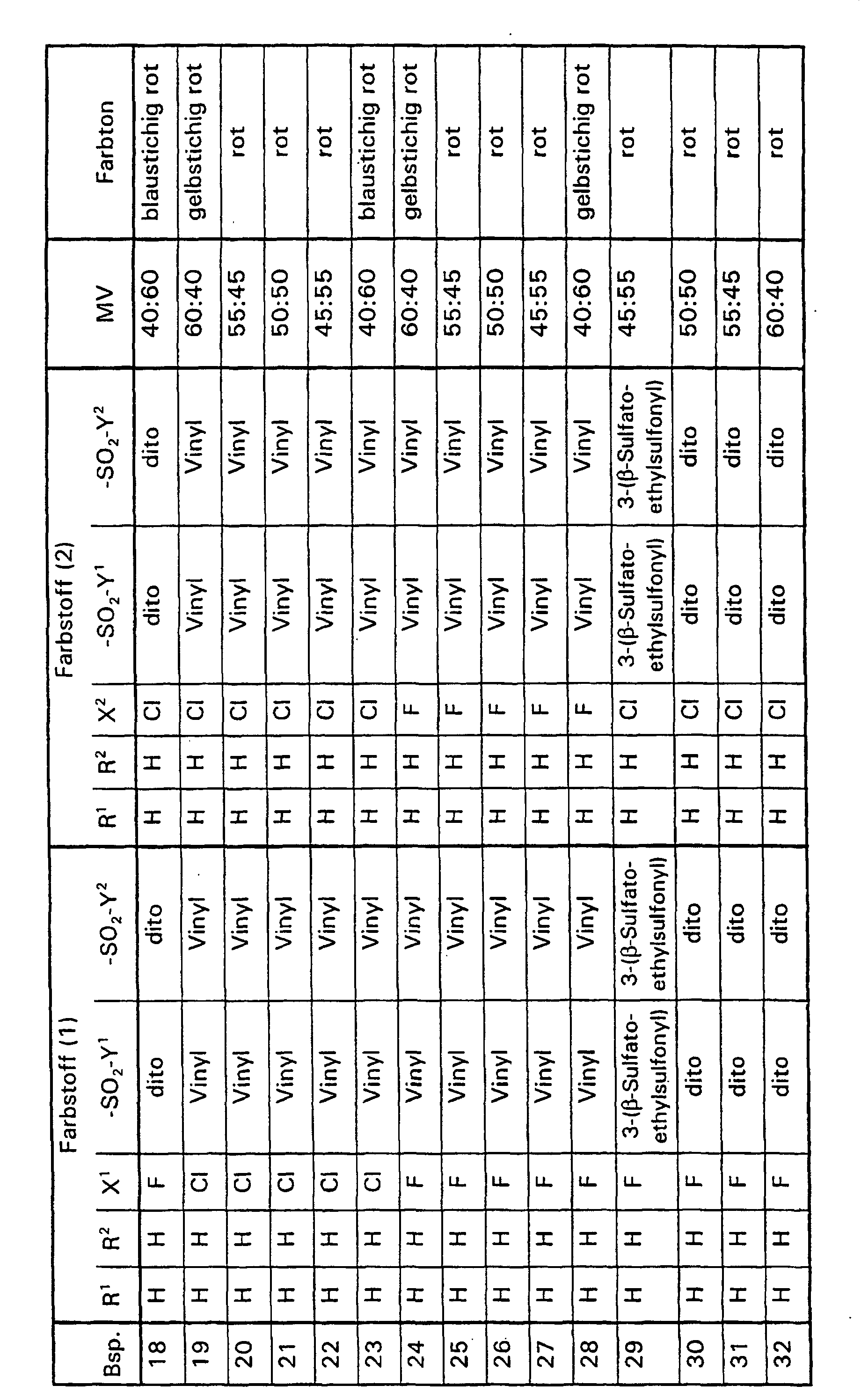

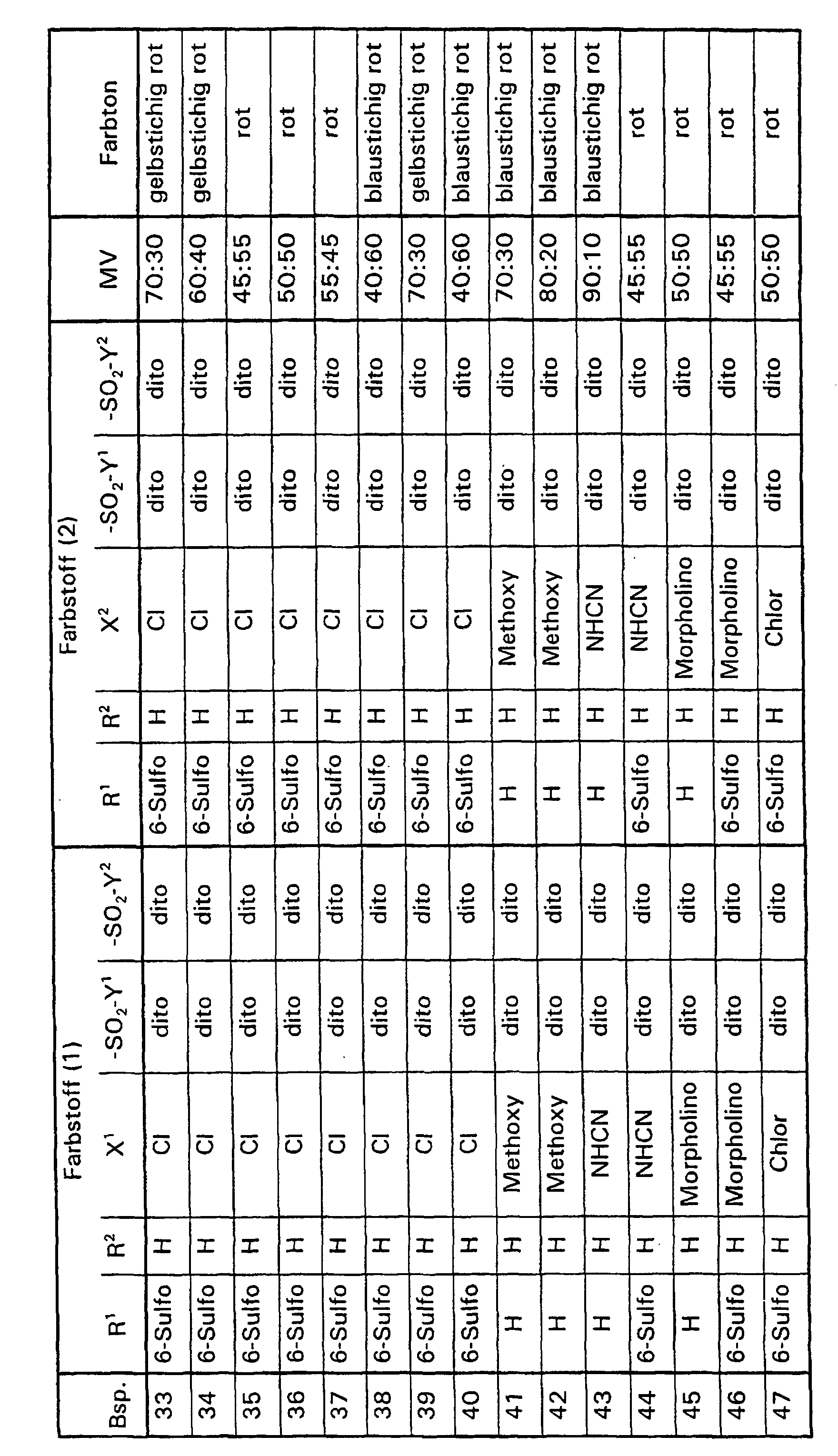

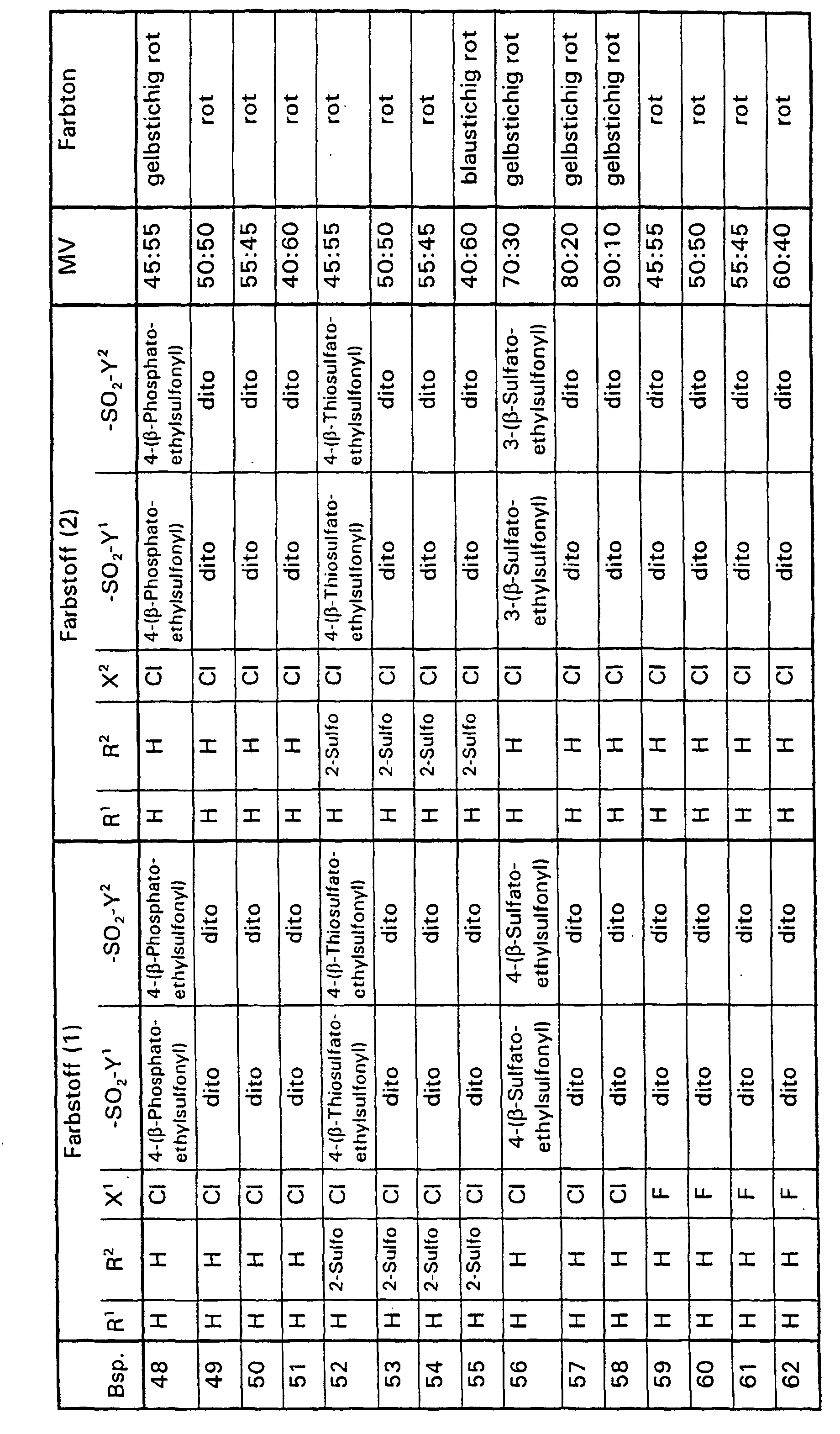

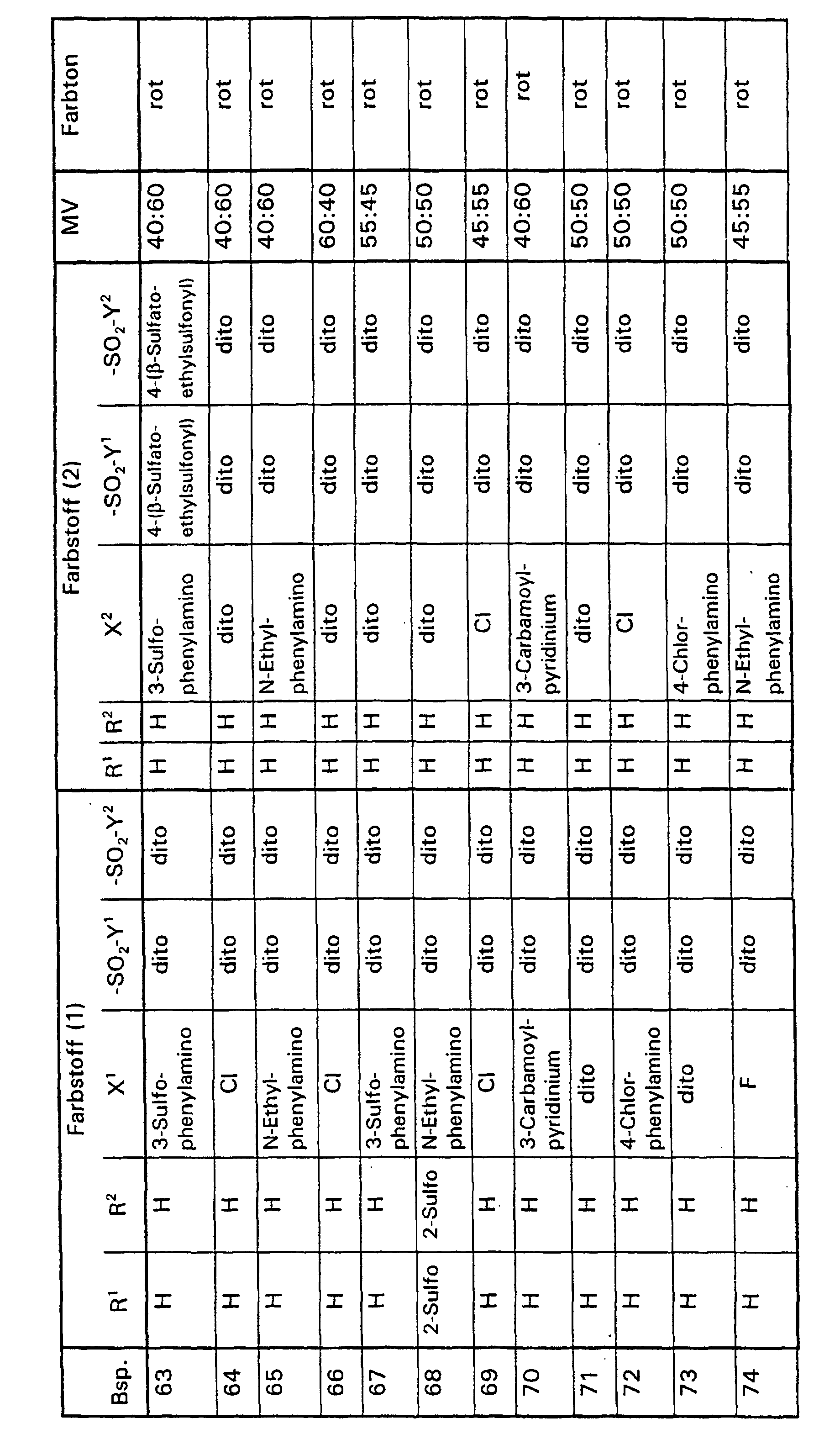

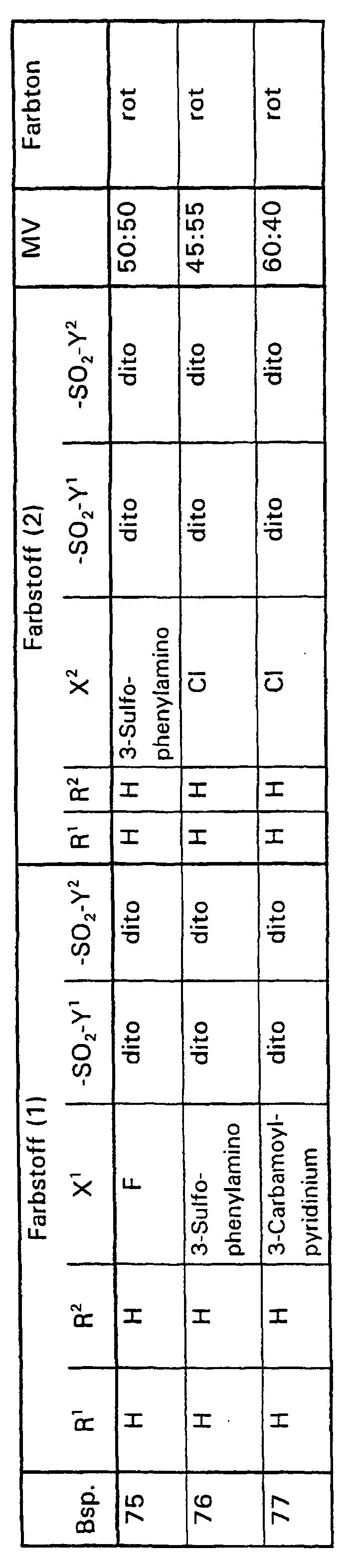

## Patentansprüche

1. Farbstoffmischung, enthaltend einen oder mehrere Azofarbstoffe entsprechend der allgemeinen Formel (1) und einen oder mehrere Azofarbstoffe entsprechend der allgemeinen Formel (2) 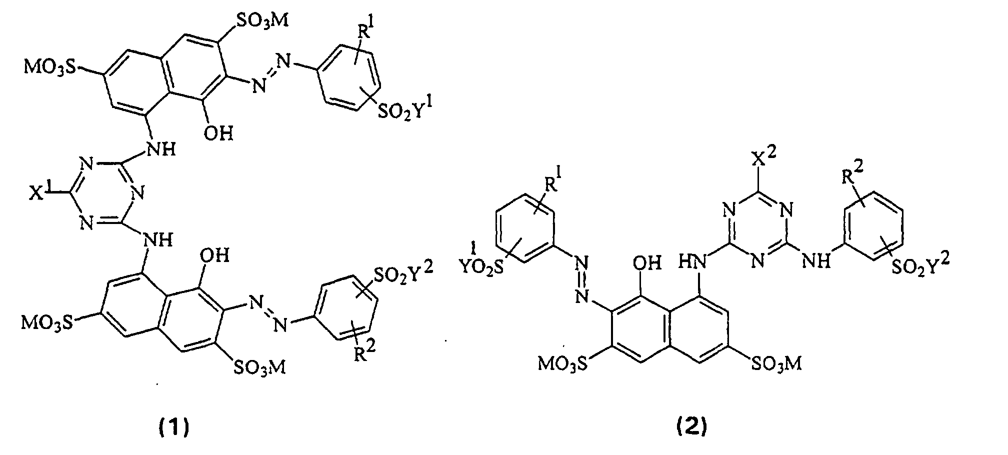 worin bedeuten:
M ist Wasserstoff, Ammonium, ein Alkalimetall oder das Äquivalent eines Erdalkalimetalls;
R¹ ist Wasserstoff oder Sulfo;
R² hat eine der Bedeutungen von R¹;
X¹ ist Fluor oder Chlor oder eine Gruppierung der allgemeinen Formel -NR³R⁴ oder -OR³, worin R³ für H oder C₁-C₄ Alkyl oder Aryl steht, das ggf. substituiert ist, und R⁴ eine Bedeutung von R³ hat oder eine die Gruppe -SO₂-Y¹ oder -SO₂-Y² tragende Aryl- oder (C₁-C₄)-Alkyl-Gruppe ist oder -NR³R⁴ gegebenenfalls substituiertes Morpholino oder Pyrimidino oder -NHCN ist;
X² hat eine Bedeutung von X¹;
Y¹ Vinyl ist oder für eine Gruppierung der allgemeinen Formel -CH₂-CH₂-Z steht, wobei
Z für eine Gruppierung steht, die durch Einwirkung von Alkali eliminiert werden kann;
Y² hat eine der Bedeutungen von Y¹;
die Gruppen -SO₂-Y¹ und -SO₂-Y² stehen meta oder para zur Azo- bzw. Aminogruppe.

2. Farbstoffmischung nach Anspruch 1, enthaltend einen oder mehrere Azofarbstoffe entsprechend der allgemeinen Formel (1) und einen oder mehrere Azofarbstoffe entsprechend der allgemeinen Formel (2) im Mischungsverhältnis von 90:10 Gew.-% bis 10:90 Gew.-%.

3. Farbstoffmischung nach Anspruch 1, enthaltend einen oder mehrere Azofarbstoffe entsprechend der allgemeinen Formel (1) und einen oder mehrere Azofarbstoffe entsprechend der allgemeinen Formel (2) im Mischungsverhältnis von 70:30 Gew.-% bis 30:70 Gew.-%.

4. Farbstoffmischung nach Anspruch 1, enthaltend einen oder mehrere Azofarbstoffe entsprechend der allgemeinen Formel (1) und einen oder mehrere Azofarbstoffe entsprechend der allgemeinen Formel (2) im Mischungsverhältnis von 55:45 Gew.-% bis 45:55 Gew.-%.

5. Verwendung einer Farbstoffmischung nach mindestens einem der Ansprüche 1 bis 4 zum Färben oder Bedrucken von hydroxy- und/oder carbonamidgruppenhaltigem Material, vorzugsweise Fasermaterial.

6. Verfahren zum Färben oder Bedrucken von hydroxy- und/oder carbonamidgruppenhaltigem Material, vorzugsweise Fasermaterial, bei welchem man einen oder mehrere Farbstoffe in gelöster Form auf das Material aufbringt und den oder die Farbstoffe auf dem Material mittels Wärme oder mit Hilfe eines alkalisch wirkenden Mittels oder mittels beider Maßnahmen fixiert, **dadurch gekennzeichnet, daß** man als Farbstoffe eine Farbstoffmischung von mindestens einem der Ansprüche 1 bis 4 einsetzt.

## Claims

1. A dye mixture comprising one or more azo dyes conforming to the general formula (1) and one or more azo dyes conforming to the general formula (2) 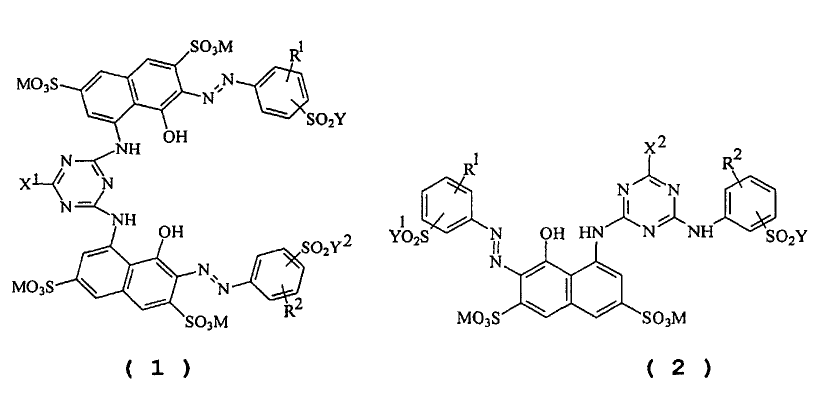 where:
M is hydrogen, ammonium, an alkali metal or the equivalent of an alkaline earth metal;
R¹ is hydrogen or sulfo;
R² has one of the meanings of R¹;
X¹ is fluorine or chlorine or a grouping of the general formula -NR³R⁴ or -OR³, where R³ is H or C₁-C₄-alkyl or aryl, which is optionally substituted, and R⁴ has one of the meanings of R³ or is a Y¹-SO₂- or Y²-SO₂-bearing aryl or C₁-C₄-alkyl group or -NR³R⁴ is optionally substituted morpholino or pyrimidino or -NHCN;
X² has one of the meanings of X¹;
Y¹ is vinyl or is a grouping of the general formula -CH₂-CH₂-Z, where
Z is a grouping which can be eliminated by the action of alkali;
Y² has one of the meanings of Y¹;
the groups -SO₂-Y¹ and -SO₂-Y² are disposed meta or para to the azo group or amino group.

2. The dye mixture of claim 1, comprising one or more azo dyes conforming to the general formula (1) and one or more azo dyes conforming to the general formula (2) in a mixing ratio of 90:10% by weight to 10:90% by weight.

3. The dye mixture of claim 1, comprising one or more azo dyes conforming to the general formula (1) and one or more azo dyes conforming to the general formula (2) in a mixing ratio of 70:30% by weight to 30:70% by weight.

4. The dye mixture of claim 1, comprising one or more azo dyes conforming to the general formula (1) and one or more azo dyes conforming to the general formula (2) in a mixing ratio of 55:45% by weight to 45:55% by weight.

5. The use of a dye mixture as claimed in at least one of claims 1 to 4 for dyeing or printing hydroxyl- and/or carboxamido-containing material, preferably fiber material.

6. A process for dyeing or printing hydroxyl- and/or carboxamido-containing material, preferably fiber material, by applying one or more dyes in dissolved form to the material and fixing the dye or dyes on the material by means of heat or with the aid of an alkaline agent or by means of both measures, which comprises using a dye mixture of at least one of claims 1 to 4 as dyes.

## Revendications

1. Mélange de colorants comprenant un ou plusieurs colorants azoïques correspondant à la formule générale (1) et un ou plusieurs colorants azoïques correspondant à la formule générale (2) 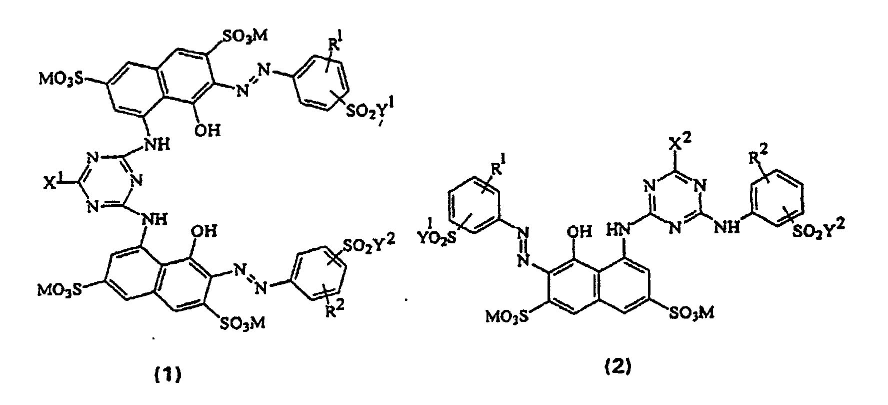 dans lesquelles :
M représente un hydrogène, un ammonium, un métal alcalin ou l'équivalent d'un métal alcalino-terreux ;
R¹ représente un hydrogène ou un sulfo ;
R² présente l'une des significations de R¹ ;
X¹ représente un fluor ou un chlore ou un groupement de formules générales -NR³R⁴ ou -OR³, dans lesquelles R³ représente H ou un alkyle en C₁-C₄ ou un aryle, qui est éventuellement substitué, et R⁴ présente l'une des significations de R³ ou représente un groupe aryle ou alkyle en C₁-C₄ portant le groupe -SO₂-Y¹ ou -SO₂-Y² ou -NR³R⁴ est un morpholino ou pyrimidino éventuellement substitué ou -NHCN ;
X² présente l'une des significations de X¹ ;
Y¹ représente un vinyle ou un groupement de formule générale -CH₂-CH₂-Z, dans laquelle
Z représente un groupement qui peut être éliminé par l'action d'un alcali ;
Y² présente l'une des significations de Y¹ ;
les groupes -SO₂-Y¹ et -SO₂-Y² sont en position méta ou para par rapport au groupe azo ou amino.

2. Mélange de colorants selon la revendication 1, comprenant un ou plusieurs colorants azoïques correspondant à la formule générale (1) et un ou plusieurs colorants azoïques correspondant à la formule générale (2) dans le rapport de mélange de 90:10 % en poids à 10:90 % en poids.

3. Mélange de colorants selon la revendication 1, comprenant un ou plusieurs colorants azoïques correspondant à la formule générale (1) et un ou plusieurs colorants azoïques correspondant à la formule générale (2) dans le rapport de mélange de 70:30 % en poids à 30:70 % en poids.

4. Mélange de colorants selon la revendication 1, comprenant un ou plusieurs colorants azoïques correspondant à la formule générale (1) et un ou plusieurs colorants azoïques correspondant à la formule générale (2) dans 1e rapport de mélange de 55:45 % en poids à 45:55% en poids.

5. Utilisation d'un mélange de colorants selon au moins l'une des revendications 1 à 4, pour la teinture ou l'impression d'une matière renfermant des groupes hydroxy et/ou carboxamide, de préférence d'une matière fibreuse.

6. Procédé de teinture ou d'impression d'une matière renfermant des groupes hydroxy et/ou carboxamide, de préférence d'une matière fibreuse, dans lequel un ou plusieurs colorants sont appliqués sous forme dissoute sur 1a matière et le ou les colorants sont fixés sur 1a matière par la chaleur ou à l'aide d'un agent alcalin ou au moyen des deux mesures, **caractérisé en ce que** l'on utilise, en tant que colorants, un mélange de colorants selon au moins l'une des revendications 1 à 4.
